# EUROPEAN PATENT SPECIFICATION

(11) **EP 3 062 988 B1**
(45) Date of publication and mention of the grant of the patent: **11.12.2019**
(21) Application number: 14799008.9
(22) Date of filing: 24.10.2014
(51) Int. Cl.: B29C 63/00, B65H 18/00

(54) **PROCEDURE FOR STRIPPING A FILM FROM PLASTIC PROFILED ELEMENTS AND CORRESPONDING MACHINE**
VERFAHREN ZUM ABZIEHEN EINER FOLIE AUS KUNSTSTOFFPROFILELEMENTEN UND ENTSPRECHENDE MASCHINE
PROCÉDURE DE DÉCOLLEMENT D'UN FILM PRÉSENT SUR DES ÉLÉMENTS PROFILÉS EN PLASTIQUE ET MACHINE CORRESPONDANTE

(30) Priority: 31.10.2013 IT MO20130304; 17.01.2014 IT MO20140007
(43) Date of publication of application: 07.09.2016
(73) Proprietor: Graf Synergy S.r.L., 41015 Nonantola (MO) (IT)
(72) Inventor: VACCARI, Andrea, 41015 Nonantola (MO) (IT)
(74) Representative: Luppi, Emanuele
(86) International application number: PCT/IB2014/065577
(87) International publication number: WO 2015/063658

(56) References cited:
- WO-A1-2009/051966
- WO-A1-2013/132406

## Description

### Technical Field

The present invention relates to a procedure for stripping a film from plastic profiled elements.

### Background Art

In the prior art the plastic profiled elements, such as PVC or the like, mostly used as window frames, are sealed together by melting of respective head surfaces in order to achieve a frame structure applicable to doors or windows.

In particular, the melting occurs by heating the portions to be connected by means of suitable electrical resistor plates and then pressing the heated portions one against the other to facilitate their melting.

Generally, the heated portions are the head extremities of the profiled elements, suitably cut at 45° to define e.g. a right-angled portion of a respective frame.

This technique is implemented by sealing machines having respective retention members of the profiled elements, movable towards each other to bring into contact the heated extremities to seal.

Such machines also have finishing systems, able to remove the sealing bead that is formed during melting of the two profiled elements.

In fact, at the line of union of the two profiled elements (surfaces cut at 45°), the exceeding portion of molten material comes out and forms a bead protruding from the visible surface of the profiled elements.

For this reason, in order to give to the finished frame an appreciable aesthetic appearance, the profiled elements, once sealed, undergo an operation to remove the bead.

The known sealing devices which have been briefly described above, however, have important drawbacks mainly related to the formation of said sealing bead.

It should be considered in fact that the sealing area of the plastic profiled elements is not completely even, and therefore, to make the profiled elements regular, a lot of material is molten with the consequent formation of an abundant bead, and therefore abundant waste material must be removed.

Furthermore, the finishing jobs for bead removal and cleaning operations of the sealing area significantly affect the overall time of frame machining.

It should be noticed in fact that for each sealing of the frame, the profiled elements have to be subsequently machined.

Furthermore the removal of said bead is greatly complicated for radial profiled elements.

To this is added that the machinery used for the above-mentioned finishing jobs are bulky, complex and particularly expensive.

This entails the need to bear additional costs and machining times also given the presence of further bulky equipment and tools.

The patent document WO 2013/132406 A1 shows a method and a device that allow to overcome the aforementioned drawbacks.

The system shown in WO 2013/132406 A1, in fact, allows sealing profiled elements without forming any sealing bead but it remains however susceptible to improvements.

In this regard it is underlined that the plastic profiled elements used for the manufacture of frames are usually provided with a surface covered with an adhesive film, applied as a protection and support for information, data and logos.

This film substantially extends for the entire length of the profiled element up to the area to seal and, during sealing, it melts together with the plastic of the profiled element itself.

When sealing is performed with the device of WO 2013/132406 A1, however, the molten material of the film remains inconveniently incorporated at the sealed areas, thus creating an unacceptable unaesthetic effect.

The use of the system shown in WO 2013/132406 A1, therefore, requires that the user, before sealing, manually removes the film, at least in the area to seal, to avoid its melting together with the profiled elements.

This operation, besides being uncomfortable and impractical for the user, obviously involves additional costs and machining times.

Another prior art is presented in WO2009/051966 which relates to methods and apparatus for peeling or otherwise removing media from substrates.

### Description of the Invention

The main aim of the present invention is to devise a procedure for stripping a film from plastic profiled elements able to overcome the above mentioned drawbacks of the prior art.

In particular, the object of the present invention is to provide a procedure which greatly simplifies the entire process of sealing the plastic profiled elements for the manufacture of frames.

Another object of the present invention is to devise a procedure which allows to overcome the mentioned drawbacks of the prior art within the ambit of a simple, rational, easy and effective to use as well as affordable solution.

The above mentioned objects are achieved by the present procedure having the characteristics mentioned in the enclosed claims.

### Brief Description of the Drawings

Other characteristics and advantages of the present invention will become better evident from the description of several preferred, but not exclusive, embodiments of a machine for stripping a film from plastic profiled elements, illustrated by way of an indicative, but not limitative, example in the accompanying drawings in which:
Figure 1 is an axonometric view of a first embodiment of the machine implementing the procedure according to the invention;
Figure 2 is an axonometric view, from another angle and in partial transparency, of the machine of Figure 1;
Figure 3 is a front view of a detail of the machine of Figure 1 in a work configuration;
Figure 4 is a front view of the detail of Figure 3 in another work configuration;
Figure 5 is an axonometric view, on an enlarged scale, of another detail of the machine of Figure 1;
Figures 6 to 8 are a sequence of plan, schematic and partial views that show the operation of the machine of Figure 1;
Figure 9 is an axonometric view of a second embodiment of the machine implementing the procedure according to the invention;
Figure 10 is an axonometric view, on an enlarged scale, of a detail of the machine of Figure 9;
Figure 11 is a plan, schematic and partial view of a detail of the machine of

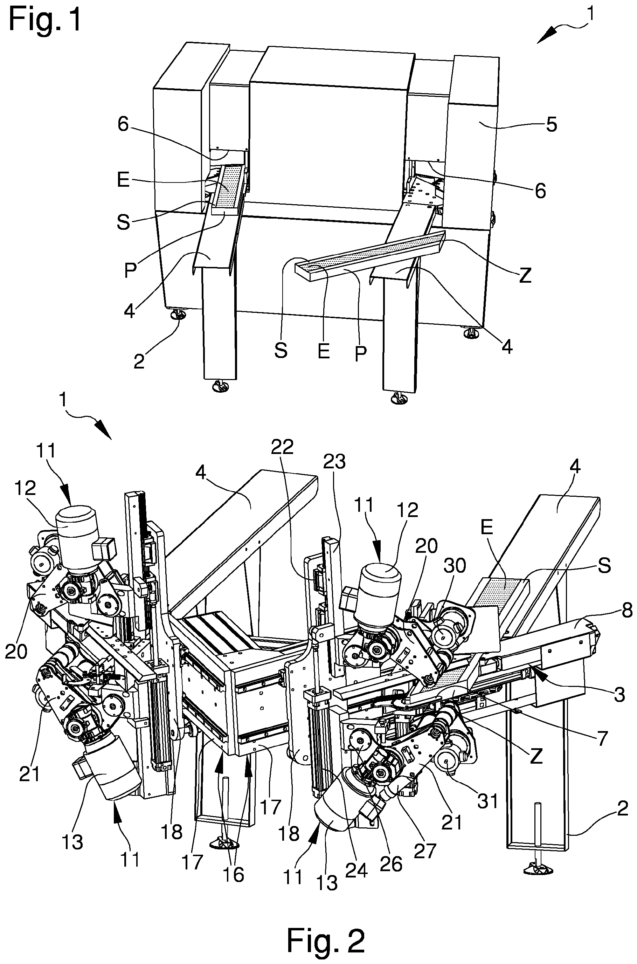

Figure 1 in a work configuration;

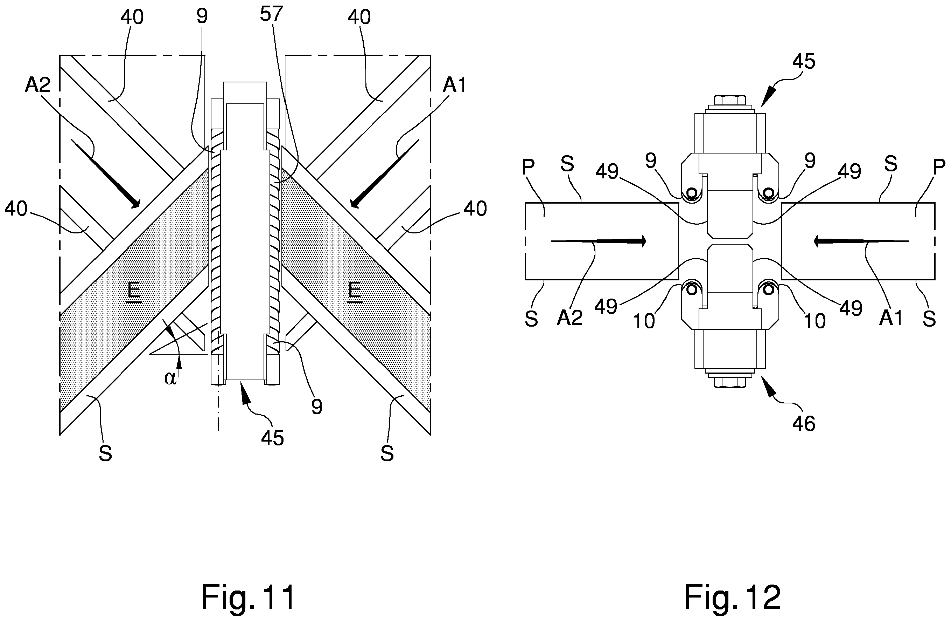

Figure 12 is a side view of the detail of Figure 11;

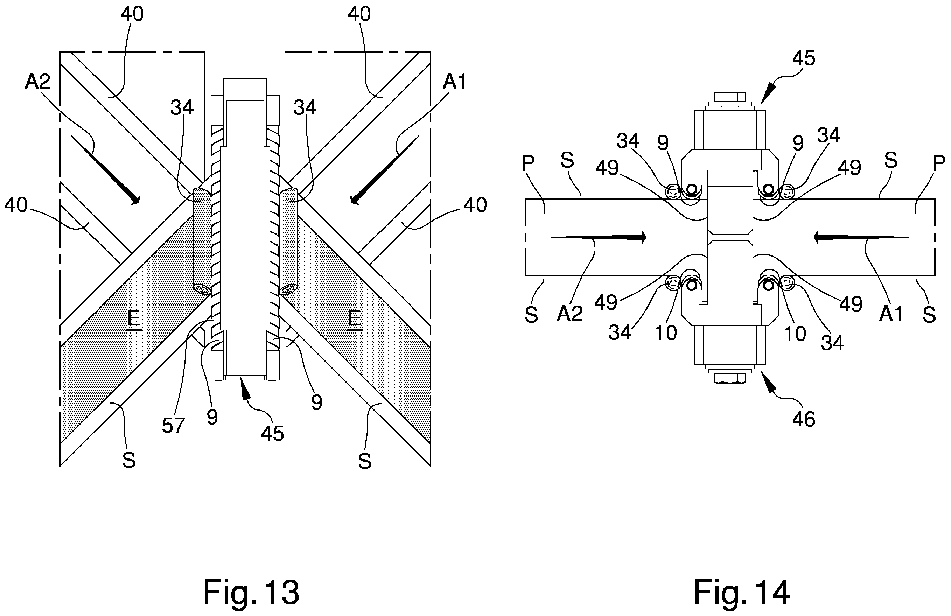

Figure 13 is a plan, schematic and partial view of the detail of Figure 11 in another work configuration;
Figure 14 is a side view of the detail of Figure 13.

### Embodiments of the Invention

With particular reference to the embodiment shown in Figures from 1 to 8, globally indicated by P are the plastic profiled elements to strip.

The plastic material, which the profiled elements P are made of, is e.g. PVC, but also other heat-sealable plastic materials other than PVC cannot be ruled out.

The profiled elements P are intended to be assembled together to manufacture frames of doors and windows; for this reason the profiled elements P are provided with respective areas to seal Z suitably cut at 45° to define a coupling between two right-angled profiled elements P.

The profiled elements P have at least a flat surface S at least in part covered with a film E to strip, e.g. of the adhesive type and joined to the flat surface S by interposition of a thin layer of glue.

The film E consists of a film having a protective and/or support function for information, data and logos and/or more.

More particularly, the flat surfaces S to be stripped on each profiled element P are two in number, opposite one another, on which a respective film E is attached to be removed at least in the proximity of the areas to seal Z.

With reference numeral 1 is globally indicated a machine for stripping the films E.

The machine 1 comprises a base frame 2 on which is mounted at least a positioning set 3 able to position at least one of the profiled elements P.

In the embodiment shown in the Figures from 1 to 8, the machine 1 has two positioning sets 3 which allow the machining, even at the same time, of two different profiled elements P.

For each positioning set 3 the machine 1 has a set of means and devices which will be better described below and which allow to strip the profiled elements P.

The positioning set 3 and the set of means/devices that intervene on a profiled element P are identical to those that occur on the other profiled element P; for simplicity's sake, therefore, the following detailed description will focus, except where specifically mentioned, only on one of the profiled elements P, on the relative positioning set 3 and on the relative means/devices for stripping.

The positioning set 3 comprises a work top 4 on which the profiled element P can be placed to introduce it inside the machine 1.

In this regard it is underlined that the work top 4 is fixed to the base frame 2 on the outside of a protective casing 5 which encloses all the moving parts of the machine 1.

The work top 4 is adjacent to an opening 6 formed in the protective casing 5 through which the profiled element P can be introduced for its machining, or at least the part corresponding to the area to seal Z that is the one that must be stripped.

The correct positioning of the profiled element P in the position which allows its machining is obtained with remarkable ease thanks to an abutment set 7 mounted on the base frame 2.

The abutment set 7 consists, e.g., in a lever which is arranged within the protective casing 5 at a predefined distance from the opening 6 and which reproduces the shape cut at 45° of the area to seal Z.

The introduction of the profiled element P through the opening 6 ends up when the area to seal Z abuts against the lever 7, with the two flat surfaces S which are turned one upwards and one downwards.

Usefully, the abutment set 7 may have with a sensor, the type of a feeler lever or the like, which detects the correct positioning of the profiled element P on the lever 7 and to which the commands of machine 1 can be slaved, to allow the operation of the machine 1 only when the profiled element P is properly positioned.

The positioning set 3 also comprises a series of automatic clamps 8 that pinch the profiled element P after its introduction inside the protective casing 5.

The automatic clamps 8 lock the profiled element both horizontally and vertically.

Alternative embodiments cannot be ruled out wherein the automatic clamps are missing and the positioning set 3 consists exclusively of a series of abutment surfaces against which the profiled element P is stopped manually by the user.

On the base frame 2 and within the protective casing 5 is mounted at least a stripping roller 9, 10 having a high friction coefficient surface.

In this respect, it is specified that in the present discussion by the expression "high friction coefficient surface" is meant that the stripping roller 9, 10 is made of a suitable material to grip the films E and is therefore selected according to the characteristics of the films E themselves.

As it will be better described later, in fact, the high friction coefficient surface of the stripping roller 9, 10 is intended to come in contact with one of the films E and to create a dragging force on it such as to separate it from the flat surface S of the profiled element P.

The high friction coefficient of the surface of the stripping roller 9, 10 should therefore not to be understood in an absolute sense but in a relative manner with respect to the capacity of the stripping roller 9, 10 to grip the films E.

The high friction coefficient surface of the stripping roller 9, 10, e.g., is made of natural rubber, of different hardnesses.

The stripping roller 9, 10 usefully has a straight cylinder conformation completely covered with natural rubber, but different embodiments, e.g. not entirely covered with rubber and/or having helical shapes, cannot be ruled out.

Since the profiled element P has two flat surfaces S with two films E, at least two stripping rollers 9, 10 are usefully provided, of which a first stripping roller 9 and a second stripping roller 10 for stripping the two opposite flat surfaces S at the same time.

The stripping rollers 9, 10 are associated with rotating operation means 11 which place the rollers themselves in rotation around their own axis.

In the embodiment shown in figures 1 to 8, e.g., the operation means 11 consist of a first motor-driven device 12 and of a second motor-driven device 13 which, via a first flexible member 14 and a second flexible member 15, drag the stripping rollers 9, 10 in rotation.

Reciprocal movement means 16 are also provided that move at least one of the positioning set 3 and the stripping rollers 9, 10 along a direction of forward movement A in which the high friction coefficient surfaces are placed in sliding contact on the flat surfaces S to remove the films E.

In other words, when the stripping rollers 9, 10 come in contact with the flat surfaces S there is no pure rolling and at the area of contact between the stripping roller 9, 10 and films E, the local speed of the stripping roller 9, 10 and the local speed of the profiled element P are different, in terms of direction and/or sense and/or intensity.

In the embodiment shown in Figures from 1 to 8, the reciprocal movement means 16 comprise a sliding set 17, 18, 19 of the stripping rollers 9, 10 along the direction of forward movement A, the positioning set 3 and the profiled element P remaining substantially stationary during the forward movement of the stripping rollers 9, 10.

The direction of forward movement A is substantially inclined with respect to the axis of the stripping roller 9, 10.

In particular, the axes of the stripping rollers 9, 10 are directed along a direction substantially parallel to the longitudinal direction of the profiled element P loaded on the positioning set 3; alternative embodiments cannot however be ruled out wherein the axes of the stripping rollers 9, 10 and the profiled element P are not parallel.

The direction of forward movement A is, on the other hand, inclined by 45° degrees with respect to the axes of the stripping rollers 9, 10 and substantially parallel to the area to seal Z of the profiled element P loaded on the positioning set 3; alternative embodiments cannot however be ruled out wherein the direction of forward movement A and the area to seal Z are not parallel.

The sliding set 17, 18, 19 consists, e.g., of a guide plate 17 associated with the base frame 2 and on which is mounted in a sliding manner a support plate 18 which carries the stripping rollers 9, 10 and is movable thanks to an actuator cylinder 19.

More in detail, each stripping roller 9, 10 is supported by a support arm 20, 21, of which a first support arm 20, supporting the first stripping roller 9 and the first motor-driven device 12, and a second support arm 21, supporting the second stripping roller 10 and the second motor-driven device 13.

With reference to the position taken by the profiled element P when associated with the positioning set 3, the first support arm 20 is arranged above the lying plane of the profiled element P while the second support arm 21 is mounted below the lying plane of the profiled element P.

The support arms 20, 21 are mounted on the sliding set 17, 18, 19 and are movable with respect to the sliding set itself to move the stripping rollers 9, 10 close/away to/from the flat surfaces S of the profiled element P along a direction substantially transversal to the flat surfaces themselves.

The first support arm 20, e.g., is associated with the support plate 18 so as to slide vertically.

The support plate 18, in fact, has a vertical guide 22 along which a support bracket 23 can slide due to the operation of a first actuator 24.

The first support arm 20 is hinged to the support bracket 23 in a first fulcrum 25 which allows it to rotate around a horizontal axis of rotation.

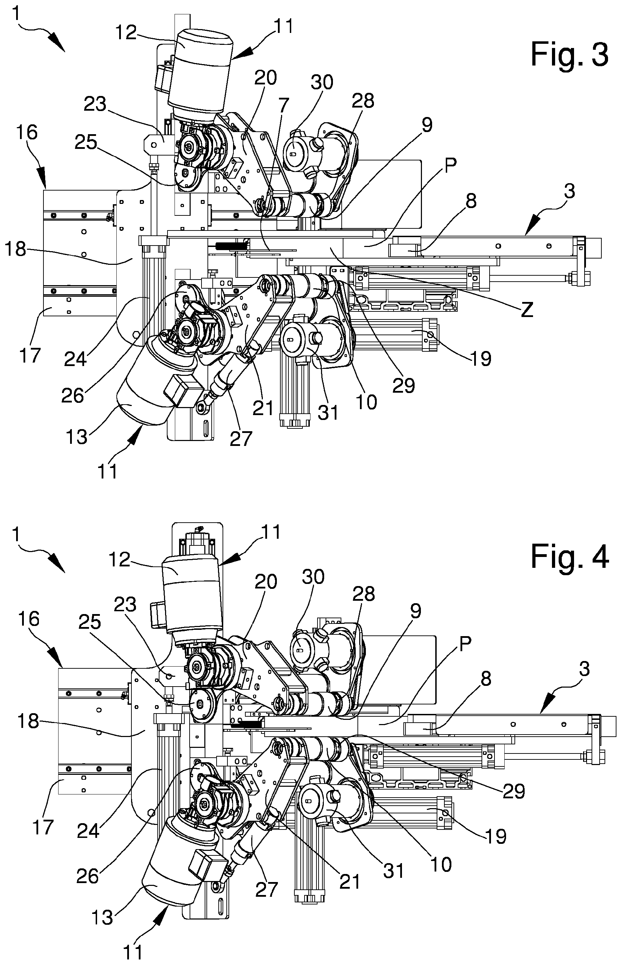

In practice, the first support arm 20 is kept lifted by the first actuator 24 to allow the positioning of the profiled element P on the positioning set 3 (figure 3), after which it is lowered to move it close to the profiled element P until the first stripping roller 9 is placed on the upper flat surface S of the profiled element itself (figure 4).

During lowering of the first support arm 20, the stroke of the first actuator 24 is greater than that required to support the first stripping roller 9 on the profiled element P; when the first stripping roller 9 comes in contact with the profiled element P, therefore, the support bracket 23 continues to lower and the first support arm 20 rotates around the first fulcrum 25.

In this way it is ensured that the first stripping roller 9 goes in support on the upper flat surface S, whatever the height of the profiled element P.

The fact that the first stripping roller 9 is kept on the upper flat surface S is ensured by the weight of the first support arm 20, which pushes the first stripping roller 9 downwards.

The second support arm 21, on the other hand, is hinged directly to the support plate 18 in a second fulcrum 26, which allows it to rotate around a horizontal axis of rotation due to the operation of a second actuator 27.

In practice, the second support arm 21 is initially lowered to allow the positioning of the profiled element P on the positioning set 3 (figure 3), after which the second actuator 27 makes it rotate around the second fulcrum 26, by lifting the second stripping roller 10 until the latter is placed against the lower flat surface S of the profiled element P (figure 4).

The fact that the second stripping roller 10 is kept on the lower flat surface S is ensured by the force applied by the second actuator 27, which pushes upwards the second support arm 21 and the second stripping roller 10.

After being placed on the flat surfaces S, the stripping rollers 9, 10 placed in rotation by the operation means 11 are made to move forward along the direction of forward movement A thanks to the sliding of the support plate 18 along the guide plate 17.

In this regard, it is underlined that the operation means 11 are able to place the stripping rollers 9, 10 in rotation in the direction corresponding to the detachment of an edge 34 to strip of the films E.

In other words, the edge 34 which has to be stripped coincides with the side of the films E cut at 45° and arranged in correspondence of the area to seal Z and, in order to detach the films E from the flat surfaces S, the stripping rollers 9, 10 rotate in a predetermined direction of rotation according to the position of the edges 34.

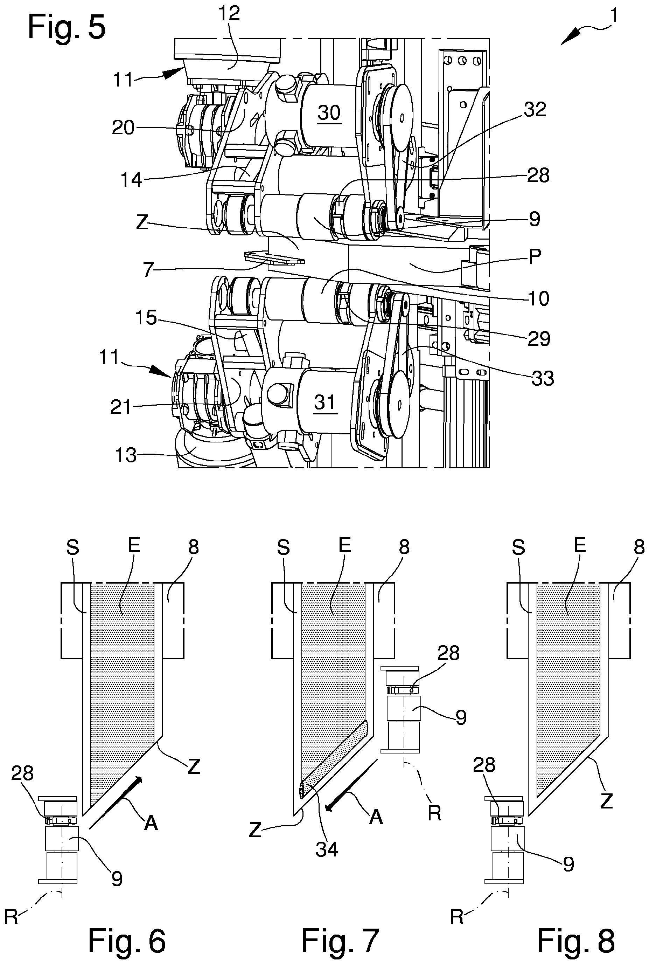

In this case, with reference to what is shown in Figures 6 to 8:
- the first stripping roller 9 moves along the direction of forward movement A along the edge 34 and keeping its axis of rotation R parallel to the longitudinal direction of the profiled element P;
- the first stripping roller 9 can therefore be split into a right side, to the right of the axis of rotation R, and into a left side, to the left of the axis of rotation R;
- the direction of rotation of the first stripping roller 9 is such as to move the edge 34 completely to the left and, for this purpose, the right side of the first stripping roller 9 rotates downwards while the left side of the first stripping roller 9 rotates upwards.

This solution ensures the stripping grip, i.e. the force acting on the films E allows the separation thereof from the profiled element P.

Advantageously, each stripping roller 9, 10 is combined with at least one cutting tool 28, 29 which allows to cut the stripped films E.

The cutting tools 28, 29, e.g., consist of at least a miller rotating around an axis of rotation coinciding with the axis of the respective stripping roller 9, 10.

Each cutting tool 28, 29 is mounted on a respective support arm 20, 21; in particular, the cutting tools 28, 29 are two in number, of which a first cutting tool 28, mounted on the first support arm 20 and substantially facing the first stripping roller 9, and a second cutting tool 29, mounted on the second support arm 21 and substantially facing the first stripping roller 9.

For the operation in rotation of the cutters 28, 29 are provided a first motor 30 and a second motor 31 which are also mounted on the support arms 20, 21 and which, via a first flexible element 32 and a second flexible element 33 drag the cutting tools 28, 29 in rotation.

The edge 34 of the films E so stripped and cut by the cutting tools 28, 29 is completely separated from the profiled element P.

To prevent that part of the films E from remaining attached to the stripping rollers 9, 10 and/or to the profiled element P, the machine 1 can be usefully equipped with a spraying system able to wet at least one of the stripping rollers 9, 10 and the films E with a non-sticking fluid.

The non-sticking fluid is preferably water, which prevents the glue interposed between the films E and the profiled elements P from adhering to the stripping rollers 9, 10, without however compromising the stripping effect and the grip the stripping rollers 9, 10 have on films E during stripping.

The use of other types of non-sticking fluids able to ensure similar results cannot however be ruled out.

Advantageously, the spraying system includes a spray nozzle arranged in the proximity of the stripping rollers 9, 10 which atomizes the non-sticking fluid that has been sprayed.

The spray nozzle can be oriented so as to direct the spray of the non-sticking fluid only towards the stripping rollers 9, 10, or only towards the films E, or towards both the stripping rollers 9, 10 and the films E. The machine 1 shown in the Figures from 1 to 8 allows to implement the procedure according to the invention which comprises the steps of:
- providing at least one of the plastic profiled elements P which, as said, has at least an area to seal Z and a flat surface S at least in part covered with a film E to strip;
- providing at least one of the stripping rollers 9, 10 which, as said, has a high friction coefficient surface;
- placing the stripping roller 9, 10 in rotation around its own axis; and
- placing in reciprocal movement at least one of the profiled element P and the stripping roller 9, 10 along a direction of forward movement A in which the high friction coefficient surface is placed in sliding contact on the flat surface S to remove the film E.

By means of the machine 1 shown in Figures 1 to 8 it is also possible to implement an additional step of the procedure which consists in cutting the stripped film E.

With particular reference to Figures 6 to 8, in fact, it is underlined that the machine 1 can be used to perform two passages on the profiled element P.

At the first passage (from the position shown in Figure 6 to the one shown in Figure 7) the motor-driven devices 12, 13 are switched on and the motors 30, 31 are kept switched off.

The stripping rollers 9, 10, therefore, are placed in rotation as they move forward on the flat surfaces S, to strip the edge 34 of the films E in the proximity of the area to seal Z.

The stripped edge 34 is collected a few millimeters away from the area to seal Z and is removed during the second passage.

At the second passage (from the position shown in Figure 7 to the one shown in Figure 8), in fact, the motors 30, 31 are switched on and the motor-driven devices 12, 13 are kept switched off.

The cutting tools 28, 29, therefore, are placed in rotation as they move forward on the flat surfaces S, so as to cut the stripped edge 34 and separate it from the profiled element P that, at the end of machining, has the area to seal Z stripped.

Alternative modes of operation are however possible.

It should in fact be noticed that the machine 1 is able to operate even more efficiently by simultaneously activating the stripping rollers 9, 10 and the cutting tools 28, 29 at each passage.

In this way the stripping rollers 9, 10 detach the films E from the flat surfaces S and, at the same time, the cutting tools 28, 29 cut them.

It should also be noticed that, by activating the stripping rollers 9, 10 and the cutting tools 28, 29 at the same time, the machine 1 is able to operate properly even by making a single passage on the profiled element P.

A further embodiment of the machine 1 can also be provided wherein the axis of rotation of the cutting tools 28, 29 is movable with respect to the axes of the stripping rollers 9, 10 so that, in case the high friction coefficient surface crushing differently from what expected, the cutting tools 28, 29 can be moved away from the profiled element P and avoid excessive cutting depth.

The stripped profiled elements P via the machine 1 are ready to be sealed together, e.g. by means of a machine of the type shown in the patent document WO 2013/132406 A1.

As previously said, in the embodiment shown in figures 1 to 8, the positioning set 3 and the profiled element P remain substantially stationary during the forward movement of the stripping rollers 9, 10; it is easy to understand, however, that alternative embodiments are possible wherein the positioning set 3 and the profiled element P move with respect to the stripping rollers 9, 10.

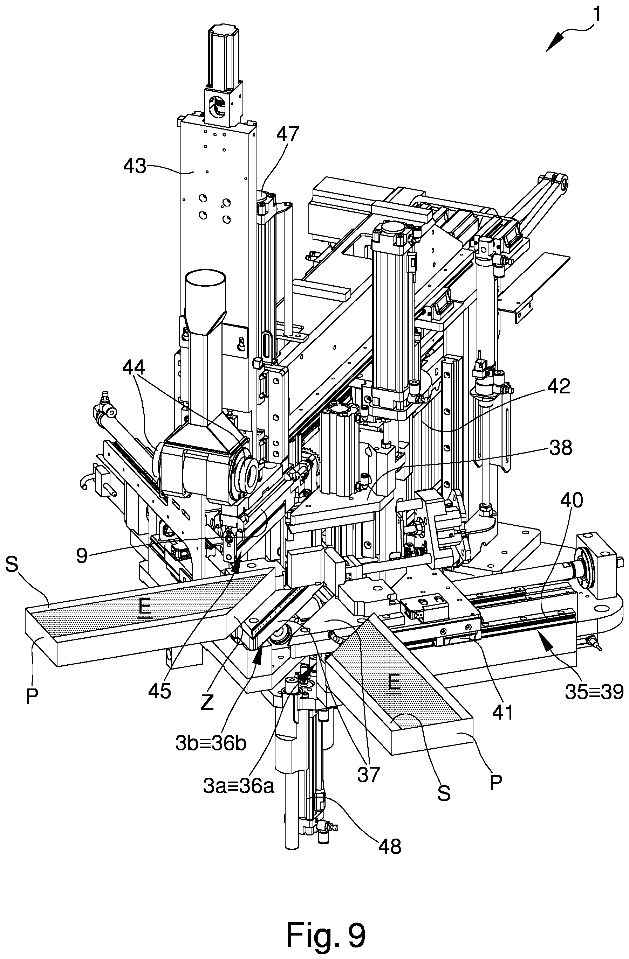

In the embodiment shown in Figures 9 to 14, e.g., the reciprocal movement means 16 comprise at least a sliding unit 35 of the positioning set 3 along the direction of forward movement A1, A2, the axis of the stripping roller 9, 10 remaining substantially stationary during the forward movement of the positioning set 3.

In this embodiment, the machine 1 is the type of the one shown in the patent document WO 2013/132406 A1 and is meant, besides stripping, also to seal the two plastic profiled elements P with respective areas to seal Z mutually facing. For this purpose the machine 1 is able:
- to strip;
- to machine the areas to seal Z by means of a removal operation (milling, molding, nailing, etc.);
- to heat the areas to seal Z, by melting at least in part the plastic making up the profiled elements P;
- to couple the areas to seal Z by pressing the profiled elements P the one against the other to keep the areas to seal Z in mutual contact.

The machine 1 comprises a base frame 2 which carries a first retention member 36a and a second retention member 36b of respective profiled elements P, able to engage the profiled elements themselves with corresponding areas to seal Z facing one another.

In particular, each retention member 36a, 36b comprises a base portion 37 on which the profiled element P is placed, and a movable portion 38 arranged above the base portion 37. The movable portion 38 is suitably moved to shift towards the base portion 37 and thus retain the profiled element P.

Each profiled element P can be placed between the base portion 37 and the movable portion 38, with the respective projecting head extremity.

The head extremities of the profiled elements P constitute the areas to seal Z which are suitably cut at 45° to define a coupling between the two right-angled profiled elements P.

The machine 1 comprises sliding means 39 of the retention members 36a, 36b, to move the profiled elements P between a first position of reciprocal moving away and a second position of reciprocal moving close in which the areas to seal Z are joined together.

In particular, the sliding means 39 have, for each retention member 36a, 36b, a sliding guide 40, extending orthogonally to the longitudinal extension of the profiled element P.

On the sliding guide 40 is mounted a carriage 41 which is integral to the base portion 37 and is coupled to a movement system, not described in detail, able to move both carriages 41 of the retention members 36a, 36b mutually close/away. The device 1 also comprises heating means 42 of the aforementioned areas to seal Z.

The heating means 42 are preferably movable between an active condition wherein they are interposed between the profiled elements P, and a non-use condition wherein they are moved away from the profiled elements P.

It should be noticed in particular that when the profiled elements P are arranged by the sliding means 39 away from each other, they define a transit area of the heating means 42. By so doing, once the areas to seal Z have been heated, the profiled elements P are moved close to one another and pressed with the respective extremity heads one against the other.

Advantageously, the heating means 42 consist of a heat-sealing element with heated plate, constituted e.g. by an electric resistor having a substantially plate-shaped conformation.

The heat-sealing element with heated plate 42 has two faces opposite one another on which the areas to seal Z can be placed in contact.

The machine 1 also has removal means 43, 44 to machine the areas to seal Z before their heating.

The removal means 43, 44, e.g., are composed of removal means by milling; alternative embodiments cannot however be ruled out wherein the removal means are of different type and provide, e.g., one or more hot tips, which remove the plastic material by molding, or one or more ultrasonic tips.

The removal means by milling 43, 44 comprise a support frame 43 located above the retention members 36a, 36b, and at least a machining tool 44 (a cutter) which can be placed substantially facing the profiled elements P to machine their areas to seal Z.

The machining tool 44 is movable between a rest condition, wherein it is not interposed between the profiled elements P, and a work condition, wherein it is interposed between the profiled elements P.

In greater detail, the removal means by milling 43, 44 preferably comprise a pair of machining tools 44, each of which having an active head on the peripheral edge of a respective area to seal Z.

As illustrated in Figure 9, the machining tools 44 are opposite one another and mounted on opposite sides of the support frame 43 to machine both profiled elements P at the same time.

The support frame 43 is movable both horizontally and vertically through a controlled axes system that allows the machining tools 44 not only to switch from the rest condition to the work condition but also to move along the areas to seal Z and perform the desired operation.

The machine 1 has also at least one containment pressing device 45, 46, moving along a direction transversal both to the direction of movement of the profiled elements P and to the lying plane on which the profiled elements themselves lie, to abut on the areas to seal Z during the coupling of the profiled elements P.

In particular, in the sealing condition of the areas to seal Z, namely when they are brought in contact and pressed one against the other, the containment pressing device 45, 46 contains the molten material of the profiled elements P.

Preferably, two containment pressing devices 45, 46, of which a first containment pressing device 45 and a second containment pressing device 46 facing one another and both moving reciprocally close to one another to abut on opposite sides of the areas to seal Z.

In particular, the first containment pressing device 45 is arranged above the profiled elements P, while the second containment pressing device 46 is arranged below the profiled elements P.

The first containment pressing device 45 and the second containment pressing device 46 are movable vertically thanks to a first actuating device 47 and a second actuating device 48.

For simplicity's sake, in Figure 9 is represented only the first containment pressing device 45.

Even in this case the profiled elements P have two opposite flat surfaces S, of which one facing upwards and the other downwards, which are at least partly covered with a film E which must be stripped at least in the proximity of the areas to seal Z.

Also in the embodiment shown in Figures 9 to 14, in fact, the machine 1 comprises two positioning sets 3a, 3b for positioning the profiled elements P, of which a first positioning set 3a which coincides with the first retention member 36a and a second positioning set 3b which coincides with the second retention member 36b.

Even the sliding units 35 of the positioning sets 3a, 3b are two in number and coincide with the sliding means 39 for the movement of the first positioning set 3a along a first direction of forward movement A1 and for the movement of the second positioning set 3b along a second direction of forward movement A2.

The first direction of forward movement A1 and the second direction of forward movement A2, which are defined by the sliding guides 40, are substantially orthogonal to one another.

Also in the embodiment of Figures from 9 to 14, the removal of films E occurs thanks to stripping rollers 9, 10 having high friction coefficient surfaces which are conveniently mounted on the containment pressing devices 45, 46.

On each containment pressing device 45, 46, in fact, is at least one stripping roller 9, 10 turned towards the first positioning set 3a and one stripping roller 9, 10 turned towards the second positioning set 3b, the stripping rollers 9, 10 being mounted on opposite faces 49 of the containment pressing device 45, 46.

Finally, the machine 1 has four stripping rollers 9, 10, of which two first stripping rollers 9 mounted on the first containment pressing device 45 and two second stripping rollers 10 mounted on the second containment pressing device 46 to strip two opposite flat surfaces S of the profiled elements P.

The axes of the stripping rollers 9, 10 are directed along a direction substantially parallel to the areas to seal Z of the profiled elements P loaded on the positioning sets 3a, 3b.

The directions of forward movement A1, A2, on the other hand, are inclined by 45° degrees with respect to the axes of the stripping rollers 9, 10 and are substantially orthogonal to the longitudinal direction of the profiled elements P loaded on the positioning sets 3a, 3b.

The stripping rollers 9, 10 are substantially helical shaped and, in other words, are defined by one or more protruding profiles 57 which wraps like a spiral around the axes of the rollers themselves.

The stripping rollers 9, 10 therefore, are intended to come in contact with the flat surfaces S at the protruding profiles 57.

Conveniently, the inclination angle α of the propeller (i.e. the acute angle between the tangent to the propeller and a plane perpendicular to the axis of the stripping rollers 9, 10) is substantially equal to 30°.

It is also pointed out that the propeller of each stripping roller 9, 10 has a clockwise or anticlockwise wrapping direction, depending on a specific arrangement on the machine 1.

The first stripping roller 9 turned towards the first positioning set 3a has an anticlockwise spiral.

The first stripping roller 9 turned towards the second positioning set 3b has a clockwise spiral.

The second stripping roller 10 turned towards the first positioning set 3a has a clockwise spiral.

The second stripping roller 10 turned towards the second positioning set 3b has an anticlockwise spiral.

This feature allows to increase the stripping effect of the stripping rollers 9, 10 on the profiled elements P.

Alternative embodiments cannot however be ruled out wherein the stripping rollers 9, 10 have, e.g., a straight cylinder conformation.

Regardless of the shape, the stripping rollers 9, 10 are usefully made of natural rubber.

The stripping rollers 9, 10 are associated with rotating operation means 11 which place the rollers themselves in rotation around their own axis.

In the embodiment shown in figures 9 to 14, e.g., the operation means 11 consist of a motorization system 50, 51, 52, 53, 54, 55, 56 mounted on each containment pressing device 45, 46.

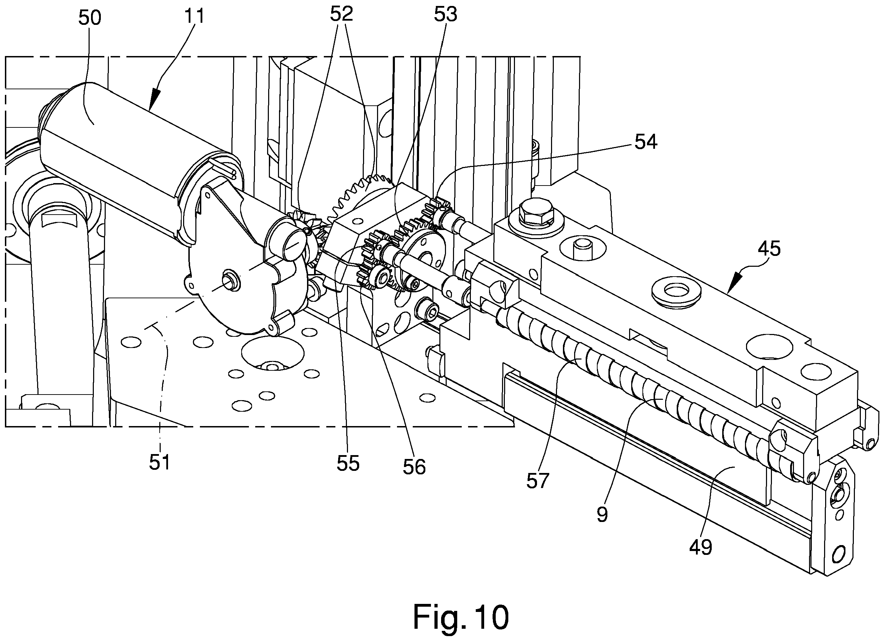

In Figure 10 is shown in detail the motorization system 50, 51, 52, 53, 54, 55, 56 present on the first containment pressing device 45, which comprises an electric motor 50 mounted on the first containment pressing device 45 and movable with it.

The electric motor 50 has an output rotating shaft 51 which is associated in rotation with the first stripping rollers 9 by interposition of a drive system 52, 53, 54, 55, 56 which allows to rotate both the first stripping rollers 9.

The drive system 52, 53, 54, 55, 56 consists, e.g., of:
- a set of gear wheels 52 connected to the output rotating shaft 51 and ending up in a primary gear wheel 53 rotating around an axis of rotation parallel to the axes of the first stripping rollers 9;
- a first secondary gear wheel 54, which is associated coaxial with one of the first stripping rollers 9 and engages directly with the primary gear wheel 53 and;
- a second secondary gear wheel 55, which is associated coaxial with the other of the first stripping rollers 9 and which engages with a transmission gear wheel 56 engaging in turn with the primary gear wheel 53.

In practice both secondary gear wheels 54, 55 receive motion from the primary gear wheel 53 but, by virtue of the transmission gear wheel 56, they always rotate in opposite directions.

The electric motor 50 is able to make the first stripping rollers 9 rotate in the direction corresponding to the detachment of the edges 34 to strip of the films E, which coincides with the counter-rotation direction with respect to the relative forward movement between the first stripping rollers 9 and the profiled elements P along the two directions of forward movement A1, A2.

In other words, if the first stripping rollers 9 were not motorized but rather idle, their contact with the flat surfaces S would lead to a partial rolling of the first stripping rollers 9 in a rolling direction of rotation; thanks to the electric motor 50, on the other hand, the first stripping rollers 9 rotate in the opposite direction to the above mentioned rolling direction of rotation.

This solution ensures the stripping grip, i.e. the force acting on the labels E which allows their separation from the profiled element P.

The second containment pressing device 46 accommodates a motorization system 50, 51, 52, 53, 54, 55, 56 completely similar to that illustrated in Figure 10 and therefore not shown in detail in the other figures.

Even in the embodiment shown in Figures 9 to 14, moreover, the machine 1 can have a spraying system to wet at least one of the stripping rollers 9, 10 and the films E with a non-sticking fluid able to prevent, at the end of stripping, part of the films E remaining attached to the stripping rollers 9, 10.

Also to this embodiment, therefore, all the considerations apply regarding the use of the spraying nozzle and the non-sticking fluid described previously with reference to the embodiment shown in Figures 1 to 8, whose detailed description is referred to integrally.

Also in the embodiment shown in the Figures 9 to 14, the machine 1 allows to implement the procedure according to the invention which comprises the steps of:
- providing at least one of the plastic profiled elements P which, as said, has at least a flat surface S at least in part covered with a film E to strip;
- providing at least one of the stripping rollers 9, 10 which, as said, has a high friction coefficient surface;
- placing in rotation the stripping roller 9, 10 around its own axis; and
- placing in reciprocal movement at least one of the profiled element P and the stripping roller 9, 10 along a direction of forward movement A1, A2 wherein the high friction coefficient surface is placed in sliding contact on the flat surface S to remove the film E.

With particular reference to Figures 11 to 14, in fact, it is underlined that the machine 1 can be used:
- to place the containment pressing devices 45, 46 so that the first stripping rollers 9 are arranged substantially at the height of the upper flat surfaces S of the profiled elements P and that the second stripping rollers 10 are arranged substantially at the height of the lower flat surfaces S of the profiled elements P (figures 11 and 12);
- to adjust the thrust pressure of the stripping rollers 9, 10;
- to move the profiled elements P close to the containment pressing devices 45, 46 along the directions of forward movement A1, A2 until the areas to seal Z are placed against the opposite faces 49 (Figures 13 and 14). During this approach the flat surfaces S of the profiled elements P come in contact with the high friction coefficient surfaces of the stripping rollers 9, 10 separating the films E from the flat surfaces S at least in the proximity of the areas to seal Z.

As said, the stripping rollers 9, 10 are four in number and are mounted on the two containment pressing devices 45, 46.

Alternative embodiments of the machine 1 having a different number of stripping rollers 9, 10 are however possible.

The stripping rollers 9, 10, e.g., may be present only on the first containment pressing device 45 and are intended, in a first step, to strip the films E of the upper flat surfaces S and, in a second step, to strip the films E of the lower flat surfaces S.

Alternatively, only one stripping roller 9, 10 can be provided mounted on the machine 1 in a manner different from what is shown in Figures 9 to 14 and intended to come in contact with all flat surfaces S by means of a sequence of different steps.

## Claims

1. Procedure for stripping a film from plastic profiled elements, comprising the steps of:
- providing at least a plastic profiled element (P) having at least an area to seal (Z) and a flat surface (S) at least in part covered with a film (E) to strip;
- providing at least a stripping roller (9, 10) having a high friction coefficient surface;
- placing said stripping roller (9, 10) in rotation around its own axis; and
- placing in reciprocal movement at least one of said profiled element (P) and said stripping roller (9, 10) along a direction of forward movement (A; A1, A2) wherein said high friction coefficient surface is placed in sliding contact on said flat surface (S) to remove said film (E).

2. Procedure according to claim 1, **characterized by** the fact that said direction of forward movement (A; A1, A2) is substantially inclined with respect to the axis of said stripping roller (9, 10).

3. Procedure according to claim 2, **characterized by** the fact that:
- the axis of said stripping roller (9, 10) is directed along a direction substantially parallel to the longitudinal direction of said profiled element (P) loaded on said positioning set (3), and
- said direction of forward movement (A) is inclined by 45° degrees with respect to the axis of said stripping roller (9, 10) and substantially parallel to said area to seal (Z) of the profiled element (P) loaded on said positioning set (3).

4. Procedure according to claim 2, **characterized by** the fact that:
- the axis of said stripping roller (9, 10) is directed along a direction substantially parallel to said area to seal (Z) of said profiled element (P) loaded on said positioning set (3), and
- said direction of forward movement (A1, A2) is inclined by 45° degrees with respect to the axis of said stripping roller (9, 10).

5. Procedure according to one or more of the preceding claims, **characterized by** the fact that said placing in rotation is able to make said stripping roller (9, 10) rotate in the direction corresponding to the detachment of an edge (34) to strip of said film (E).

6. Procedure according to one or more of the preceding claims, **characterized by** the fact that it comprises cutting said stripped film (E).

## Patentansprüche

1. Verfahren zum Ablösen einer Folie von Kunststoff-Profilelementen, umfassend die Schritte von:
- Bereitstellen mindestens eines Kunststoff-Profilelements (P) mit mindestens einem abzudichtenden (Z) Bereich und einer ebenen Oberfläche (S), die zumindest teilweise mit einer abzulösenden Folie (E) bedeckt ist;
- Bereitstellen mindestens einer Ablöserolle (9, 10) mit einer Oberfläche mit hohem Reibungskoeffizienten;
- Anordnen der Ablöserolle (9, 10) in Drehung um ihre eigene Achse; und
- Platzieren mindestens eines der Profilelemente (P) und der Ablöserolle (9, 10) in wechselseitiger Bewegung entlang einer Vorwärtsbewegungsrichtung (A; A1, A2), wobei die Oberfläche mit hohem Reibungskoeffizienten in Gleitkontakt auf der ebenen Oberfläche (S) platziert ist, um die Folie (E) abzulösen.

2. Verfahren nach Anspruch 1, **gekennzeichnet durch** die Tatsache, dass die Vorwärtsbewegungsrichtung (A; A1, A2) in Bezug auf die Achse der Ablöserolle (9, 10) im Wesentlichen geneigt ist.

3. Verfahren nach Anspruch 2, **gekennzeichnet durch** die Tatsache, dass:
- die Achse der Ablöserolle (9, 10) entlang einer Richtung ausgerichtet ist, die im Wesentlichen parallel zu der Längsrichtung des auf den Positionierungssatz (3) geladenen Profilelements (P) verläuft, und
- die Vorwärtsbewegungsrichtung (A) um 45° Grad in Bezug auf die Achse der Ablöserolle (9, 10) geneigt und im Wesentlichen parallel zu dem abzudichtenden (Z) Bereich des auf den Positionierungssatz (3) geladenen Profilelements (P) ist.

4. Verfahren nach Anspruch 2, **gekennzeichnet durch** die Tatsache, dass:
- die Achse der Ablöserolle (9, 10) entlang einer Richtung ausgerichtet ist, die im Wesentlichen parallel zu dem abzudichtenden (Z) Bereich des auf den Positionierungssatz (3) geladenen Profilelements (P) ist, und
- die Vorwärtsbewegungsrichtung (A1, A2) um 45° Grad in Bezug auf die Achse der Ablöserolle (9, 10) geneigt ist.

5. Verfahren nach einem oder mehreren der vorstehenden Ansprüche, **gekennzeichnet durch** die Tatsache, dass das Platzieren in Drehung in der Lage ist, die Ablöserolle (9, 10) in die Richtung drehen zu lassen, die dem Ablösen einer Kante (34) zum Ablösen der Folie (E) entspricht.

6. Verfahren nach einem oder mehreren der vorstehenden Ansprüche, **gekennzeichnet durch** die Tatsache, dass es Schneiden der abgelösten Folie (E) umfasst.

## Revendications

1. Procédure de décollement d'un film d'éléments profilés en matière plastique, comprenant les étapes de :
- fourniture d'au moins un élément profilé en matière plastique (P) présentant au moins une surface à coller (Z) et une surface plate (S) au moins en partie recouverte avec un film (E) à décoller ;
- fourniture d'au moins un rouleau de décollement (9, 10) présentant une surface à coefficient de friction élevé ;
- mise en rotation dudit rouleau de décollement (9, 10) autour de son propre axe ; et
- mise en mouvement réciproque d'au moins un dudit élément profilé (P) et dudit rouleau de décollement (9, 10) le long d'une direction de mouvement vers l'avant (A ; A1, A2) dans laquelle ladite surface à coefficient de friction élevé est mise en contact glissant sur ladite surface plate (S) pour retirer ledit film (E).

2. Procédure selon la revendication 1, **caractérisée par le fait que** ladite direction de mouvement vers l'avant (A ; A1, A2) est sensiblement inclinée par rapport à l'axe dudit rouleau de décollement (9, 10).

3. Procédure selon la revendication 2, **caractérisée par le fait que** :
- l'axe dudit rouleau de décollement (9, 10) est dirigé le long d'une direction sensiblement parallèle à la direction longitudinale dudit élément profilé (P) chargé sur ledit ensemble de positionnement (3), et
- ladite direction de mouvement vers l'avant (A) est inclinée de 45° degrés par rapport à l'axe dudit rouleau de décollement (9, 10) et sensiblement parallèle à ladite surface à coller (Z) de l'élément profilé (P) chargé sur ledit ensemble de positionnement (3).

4. Procédure selon la revendication 2, **caractérisée par le fait que** :
- l'axe dudit rouleau de décollement (9, 10) est dirigé le long d'une direction sensiblement parallèle à ladite surface à coller (Z) dudit élément profilé (P) chargé sur ledit ensemble de positionnement (3), et
- ladite direction de mouvement vers l'avant (A1, A2) est inclinée de 45° degrés par rapport à l'axe dudit rouleau de décollement (9, 10).

5. Procédure selon une ou plusieurs des revendications précédentes, **caractérisée par le fait que** ladite mise en rotation est apte à amener ledit rouleau de décollement (9, 10) à tourner dans la direction correspondant au détachement d'une arête (34) pour décoller ledit film (E).

6. Procédure selon une ou plusieurs des revendications précédentes, **caractérisée par le fait qu'**elle comprend la coupe dudit film décollé (E).
